# EUROPÄISCHE PATENTSCHRIFT

(11) **EP 3 694 666 B1**
(45) Veröffentlichungstag und Bekanntmachung des Hinweises auf die Patenterteilung: **27.07.2022**
(21) Anmeldenummer: 18759249.8
(22) Anmeldetag: 08.08.2018
(51) Int. Cl.: B23B 31/20

(54) **SPANNZANGE MIT DICHTUNG**
COLLET COMPRISING A SEAL
PINCE DE SERRAGE MUNIE D'UN JOINT D'ÉTANCHÉITÉ

(30) Priorität: 12.10.2017 DE 102017123811
(43) Veröffentlichungstag der Anmeldung: 19.08.2020
(73) Patentinhaber: JBS System GmbH, 24119 Kronshagen (DE)
(72) Erfinder: JESS, Maik, 24119 Kronshagen (DE)
(74) Vertreter: Lobemeier, Martin Landolf
(86) Internationale Anmeldenummer: PCT/DE2018/100698
(87) Internationale Veröffentlichungsnummer: WO 2019/072332

(56) Entgegenhaltungen:
- CN-A- 105 772 773
- US-A- 2 346 706
- US-A- 3 022 082
- US-A- 3 539 193
- US-A- 4 858 938
- US-A- 5 096 213
- US-B2- 6 726 221

## Beschreibung

Die Erfindung betrifft eine Führungs- bzw. Spannzange. Insbesondere betrifft die Erfindung eine Spannzange mit einer Mehrzahl von gegeneinander beweglichen Spannbacken, wenigstens einer in einer von einander zugewandten Seitenflächen benachbarter Spannbacken vorgesehenen Ausnehmung, und jeweils einer in eine Ausnehmung eingesetzten, die benachbarten Spannbacken gegeneinander federnd lagernden Feder.

Derartige Spannzangen sind beispielsweise aus der DE 20 2013 010 357 U1, der DE 10 2014 018 695 B4, der DE 93 20 515 U1 und der DE 19 07 956 B2 bekannt. Eine Spannzange gemäß dem Oberbegriff des Anspruchs 1 ist beispielsweise aus der US 6,726,221 B2 bekannt.

Ein Problem aller bekannter Spannzangen besteht darin, dass bei der spanenden Bearbeitung von Werkstücken Späne in die Zwischenräume und Anlageflächen der jeweiligen Spannzange gelangen. Dieses führt zu Funktionseinschränkungen durch Blockieren der Bewegungsfreiheit der Spannbacken, zu mangelndem Rundlauf und veränderter Ausrichtung des Werkstücks, erhöhtem Verschleiß der Spannzange und verringerten Klemmkräften.

Insbesondere bei Langdrehmaschinen tritt dieses Problem verstärkt auf, da die Zerspanung bei diesen Maschinen in unmittelbarer Nähe der Spannzange erfolgt. Besonders gravierend ist dabei die Erzeugung sehr feiner Späne, die sich in engen Spalten, Hinterschneidungen, Sacklöchern o.ä. aufbauen und festsetzen.

Aufgabe der Erfindung ist es daher, eine Spannzange zu schaffen, die trotz der speziell bei Langdrehmaschinen vorhandenen Umstände und dem Einfluss von Spänen ihre Funktionsfähigkeit beibehält.

Diese Aufgabe wird erfindungsgemäß durch die Spannzange mit den Merkmalen von Anspruch 1 gelöst. Die Unteransprüche geben vorteilhafte Ausgestaltungen der Erfindung wieder.

Grundgedanke der Erfindung ist es, jeweils eine Dichtung in jeden von zwei benachbarten Spannbacken gebildeten Spalt einzubringen, die zur Befestigung an der Spannzange die bereits in den Spannbacken vorhandenen Ausnehmungen zur Aufnahme der Federn nutzt. Die Dichtung ist insbesondere aus einem elastischen Material gefertigt. Dabei bleibt die Funktion der vorhandenen Federn unangetastet, in dem die Dichtung zwar in die Ausnehmung eingreift, aber als Hohlzylinder die Feder ohne Beeinträchtigung aufnimmt.

Erfindungsgemäß ist also eine Spannzange vorgesehen mit einer Mehrzahl von gegeneinander beweglichen Spannbacken, wenigstens einer in einer von einander zugewandten Seitenflächen benachbarter Spannbacken vorgesehenen Ausnehmung, jeweils einer in eine Ausnehmung eingesetzten, die benachbarten Spannbacken gegeneinander federnd lagernden Feder, und jeweils einer den Spalt zwischen zwei Seitenflächen benachbarter Spannbacken dichtenden Dichtung mit jeweils einem in die wenigstens eine Ausnehmung einer Seitenfläche eingreifenden Befestigungsabschnitt, als ein die Feder aufnehmender Hohlzylinder ausgebildet ist.

Diese Ausgestaltung ermöglicht es auf besonders einfache Weise bereits vorhandene Spannbacken mit der Dichtung nachzurüsten, ohne das weitere Anpassungen notwendig wären. Die vorhandenen Federn werden einfach in den als Hohlzylinder ausgebildeten Befestigungsabschnitt der Dichtungen eingesetzt und können ihre Funktion ohne Behinderung durch die Dichtung weiterhin ausüben.

Die äußere Kontur der Dichtung entspricht bevorzugt dem Außenumriss der Seitenflächen der Spannbacken, sodass beim Zerspanen anfallende Späne nicht in den Zwischenraum zwischen den Spannbacken gelangen können.

Weiter bevorzugt füllt die Dichtung den Spalt zwischen zwei Seitenflächen benachbarter Spannbacken vollflächig aus. Aufgrund dieser bevorzugten Ausgestaltung ist die Fertigung der Dichtung unter Einhaltung enger Toleranzen sehr einfach möglich. Außerdem ist eine vollflächige Anbindung des Befestigungsabschnitts als integraler Bestandteil der Dichtung bei einer vollflächigen Ausgestaltung der Dichtung auch hinsichtlich der gleichmäßigen Verteilung von während der Verwendung auftretenden Kräfte vorteilhaft.

Alternativ kann auch vorgesehen sein, dass die Außenkontur der Dichtung mittels Stegen mit dem Befestigungsabschnitt verbunden ist. Diese Ausgestaltung hat den Vorteil, dass zwischen den Spannbacken nur wenig Material, soweit es für die Dichtung des Spalts erforderlich ist, eingebracht und bei einer Relativbewegung der Backen zueinander nicht überwunden werden muss.

Dieses ist insbesondere dann vorteilhaft, wenn die Dichtung eine sich aus der Ebene der Dichtung erstreckende Dichtlippe aufweist. Die Dichtlippe ist besonders bevorzugt am Rand der Dichtung angeordnet und folgt speziell der Außenkontur der Dichtung.

Der Befestigungsabschnitt und/oder die Dichtlippe erstrecken sich insbesondere zu beiden Seiten der Ebene der Dichtung, sodass die Dichtung besonders bevorzugt in Bezug auf die Spaltebene zwischen den Spannbacken spiegelbildsymmetrisch ausgebildet ist. Weist die Dichtung also zwei gegenüberliegende Befestigungsabschnitte auf, so greifen diese in sich gegenüberliegende Ausnehmungen der sich gegenüberliegenden Seitenflächen benachbarter Spannbacken ein bzw. sind in diese eingesetzt. Sich zu beiden Seiten der Dichtung erstreckende Dichtlippen stützen sich entsprechend an den sich gegenüberliegenden Seitenflächen benachbarter Spannbacken ab.

Die Spannzange nach der Erfindung weist bevorzugt drei Spannbacken auf.

Schließlich erscheint es von Vorteil, wenn die Dichtung insbesondere aus einem Elastomermaterial und speziell durch Spritzgießen oder 3D-Druck hergestellt ist.

Die Erfindung wird im Folgenden anhand eines in den beigefügten Zeichnungen sehr schematisch dargestellten, besonders bevorzugt ausgestalteten Ausführungsbeispiels näher erläutert. Es zeigen:
- Fig. 1: eine perspektivische Ansicht einer besonders bevorzugt ausgestalteten Spannzange nach der Erfindung;
- Fig. 2: eine schematische Seitenansicht der Spannzange aus Fig. 1; und

- Fig. 3: eine besonders bevorzugt ausgestaltete Dichtung zur Verwendung in der zuvor dargestellten Spannzange in einer geschnittenen Ansicht (A) und in einer Draufsicht (B).

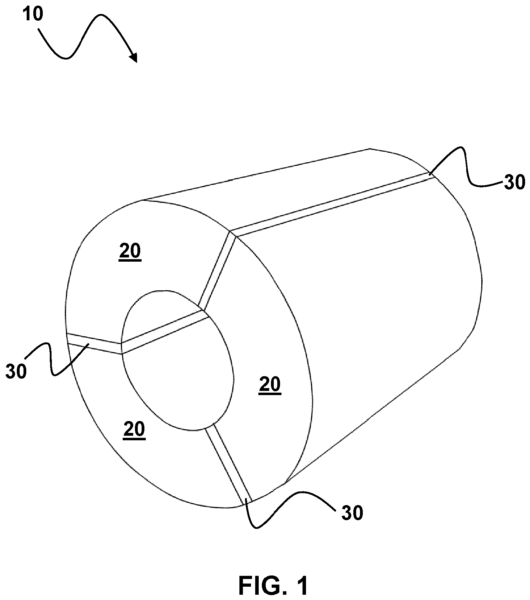

Fig. 1 zeigt exemplarisch eine perspektivische Ansicht einer besonders bevorzugt ausgestalteten Zugzange nach der Erfindung, z.B. Doppelkonuszangen. Wenngleich die Erfindung anhand dieser speziellen Art einer Spannzange erläutert wird, eignet sich die Erfindung grundsätzlich für jede Art von Spann- bzw. Führungszangen. Wenngleich ein die Spannzangen zusammenhaltendes Element aus Gründen der Übersichtlichkeit nicht dargestellt ist, versteht es sich, dass dafür gesorgt sein muss, dass die Spannbacken zueinander beweglich sein müssen, nicht aber gänzlich auseinanderfallen dürfen.

Die dargestellte Spannzange 10 weist eine Mehrzahl, nämlich drei gegeneinander bewegliche Spannbacken 20 auf, die gegeneinander beweglich sind. Der jeweilige zwischen den Spannbacken 20 gebildete Spalt, der zwischen zwei Seitenflächen benachbarter Spannbacken 20 gebildet ist, wird durch jeweils eine Dichtung 30 allseits gedichtet, sodass bei der Zerspanung anfallende Späne in den Spalt nicht eintreten kann.

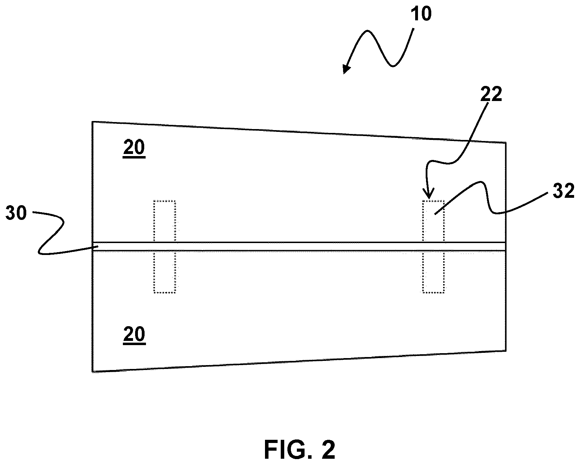

Die Dichtung 30 ist - wie Fig. 2 zeigt - an der Spannbacke 10 durch die in die in den Seitenflächen benachbarter Spannbacken 20 eingerichteten Ausnehmungen 22 eingreifenden Befestigungsabschnitte 32 befestigt.

Die vorliegende Erfindung eignet sich insbesondere zum Nachrüsten bereits vorhandener Spannzangen, sei es solcher mit Schraubenfedern oder mit Blattfedern, sofern deren Spannbacken eine Ausnehmung zur Befestigung der Federn aufweisen. Daneben eignet sich die Erfindung selbstverständlich auch zur Neuanfertigung erfindungsgemäßer Spannzangen.

## Patentansprüche

1. Spannzange (10) mit
- einer Mehrzahl von gegeneinander beweglichen Spannbacken (20),
- wenigstens einer in einer von einander zugewandten Seitenflächen benachbarter Spannbacken (20) vorgesehenen Ausnehmung (22), und
- jeweils einer in eine Ausnehmung (22) eingesetzten, die benachbarten Spannbacken (20) gegeneinander federnd lagernden Feder,
**gekennzeichnet durch**
jeweils eine den Spalt zwischen zwei Seitenflächen benachbarter Spannbacken (20) dichtende Dichtung (30) mit einem in die wenigstens eine Ausnehmung (22) eingreifenden Befestigungsabschnitt (32), der als ein die Feder aufnehmender Hohlzylinder ausgebildet ist.

2. Spannzange (10) nach Anspruch 1, **dadurch gekennzeichnet, dass** die äußere Kontur der Dichtung (30) dem Außenumriss der Seitenflächen der Spannbacken (20) entspricht.

3. Spannzange (10) nach einem der vorhergehenden Ansprüche, **dadurch gekennzeichnet, dass** die Dichtung (30) den Spalt zwischen zwei Seitenflächen benachbarter Spannbacken (20) vollflächig ausfüllt.

4. Spannzange (10) nach einem der vorhergehenden Ansprüche, **dadurch gekennzeichnet, dass** die Dichtung (30) eine sich aus der Ebene der Dichtung (30) erstreckende Dichtlippe (34) aufweist.

5. Spannzange (10) nach Anspruch 4, **dadurch gekennzeichnet, dass** die Dichtlippe (34) am Rand der Dichtung (30) angeordnet ist.

6. Spannzange (10) nach einem der vorhergehenden Ansprüche, dass die Dichtung (30) in Bezug auf die Spaltebene zwischen den Spannbacken (20) spiegelbildsymmetrisch ausgebildet ist.

7. Spannzange (10) nach einem der vorhergehenden Ansprüche, **gekennzeichnet durch** drei Spannbacken (20a, 20b, 20c).

## Claims

1. Collet (10) comprising
- a plurality of clamping jaws (20) which can move relative to one another,
- at least one recess (22) provided in one of the mutually facing side faces of adjacent clamping jaws (20), and
- a spring which is inserted into each recess (22) and resiliently loads the adjacent clamping jaws (20) with respect to one another,
**characterized by**
a seal (30) which seals the gap in each case between two side faces of adjacent clamping jaws (20) and comprises a fastening portion (32) which engages in the at least one recess (22) and is designed as a hollow cylinder accommodating the spring.

2. Collet (10) according to claim 1, **characterized in that** the outer contour of the seal (30) corresponds to the outer profile of the side faces of the clamping jaws (20).

3. Collet (10) according to either of the preceding claims, **characterized in that** the seal (30) completely fills the gap between two side faces of adjacent clamping jaws (20).

4. Collet (10) according to any of the preceding claims, **characterized in that** the seal (30) has a sealing lip (34) which extends from the plane of the seal (30).

5. Collet (10) according to claim 4, **characterized in that** the sealing lip (34) is arranged on the edge of the seal (30).

6. Collet (10) according to any of the preceding claims, that the seal (30) is mirror-symmetrical with respect to the gap plane between the clamping jaws (20).

7. Collet (10) according to any of the preceding claims, **characterized by** three clamping jaws (20a, 20b, 20c).

## Revendications

1. Pince de serrage (10) comportant
- une pluralité de mâchoires de serrage (20) mobiles les unes contre les autres,
- au moins un évidement (22) situé dans l'une des surfaces latérales se faisant face des mâchoires de serrage (20) adjacentes, et
- respectivement, un ressort inséré dans un évidement (22) et logeant élastiquement les mâchoires de serrage (20) adjacentes l'une contre l'autre, **caractérisée par**
respectivement, un joint d'étanchéité (30) étanchant l'espace entre deux surfaces latérales des mâchoires de serrage (20) adjacentes, comportant une section de fixation (32) venant en prise dans l'au moins un évidement (22), lequel est conçu sous la forme d'un cylindre creux logeant le ressort.

2. Pince de serrage (10) selon la revendication 1, **caractérisée en ce que** le contour extérieur du joint d'étanchéité (30) correspond au contour extérieur des surfaces latérales des mâchoires de serrage (20).

3. Pince de serrage (10) selon l'une quelconque des revendications précédentes, **caractérisée en ce que** le joint d'étanchéité (30) remplit complètement l'espace entre deux surfaces latérales des mâchoires de serrage (20) adjacentes.

4. Pince de serrage (10) selon l'une quelconque des revendications précédentes, **caractérisée en ce que** le joint d'étanchéité (30) comporte une lèvre d'étanchéité (34) s'étendant hors du plan du joint d'étanchéité (30).

5. Pince de serrage (10) selon la revendication 4, **caractérisée en ce que** la lèvre d'étanchéité (34) est disposée sur le bord du joint d'étanchéité (30).

6. Pince de serrage (10) selon l'une quelconque des revendications précédentes, le joint d'étanchéité (30) étant conçu de manière symétrique en miroir par rapport au plan d'espace entre les mâchoires de serrage (20).

7. Pince de serrage (10) selon l'une quelconque des revendications précédentes, **caractérisée par** trois mâchoires de serrage (20a, 20b, 20c).
